# EUROPÄISCHE PATENTSCHRIFT

(11) **EP 3 619 150 B1**
(45) Veröffentlichungstag und Bekanntmachung des Hinweises auf die Patenterteilung: **29.12.2021**
(21) Anmeldenummer: 19714656.6
(22) Anmeldetag: 29.03.2019
(51) Int. Cl.: B65G 65/00, B65G 1/04, B65G 1/08, B65G 1/137

(54) **MOBILE KOMMISSIONIER-VORRICHTUNG FÜR EIN REGALLAGER**
MOBILE PICKING DEVICE FOR A RACK STORE
DISPOSITIF DE PRÉLÈVEMENT MOBILE POUR UN MAGASIN À RAYONNAGE

(30) Priorität: 29.03.2018 DE 202018101774 U
(43) Veröffentlichungstag der Anmeldung: 11.03.2020
(73) Patentinhaber: D&T Engineering GmbH, 84539 Ampfing (DE)
(72) Erfinder: FELDL, Peter, 84539 Ampfing (DE)
(74) Vertreter: Schmidt, Axel
(86) Internationale Anmeldenummer: PCT/EP2019/058080
(87) Internationale Veröffentlichungsnummer: WO 2019/185909

(56) Entgegenhaltungen:
- EP-A1- 3 192 616
- DE-A1-102014 007 539

## Beschreibung

Die vorliegende Erfindung betrifft eine mobile Kommissionier-Vorrichtung für ein Regallager.

Aus dem Stand der Technik sind für Waren- bzw. Stückgutlager, die i.d.R. als Regallager ausgeführt sind, diverse Ansätze für eine zumindest teilweise Automatisierung der Kommissionierung bekannt. Regallager dienen dabei auch einer gezielten Zuführung und Materialversorgung direkt an einer Fertigungsinsel. Unter dem Begriff der Kommissionierung wird nachfolgend sowohl eine Entnahme geleerter Lagerbehälter, deren Ergänzung durch Ersatz oder Austausch mit entsprechend gefüllten Lagerbehältern, wie auch eine Entnahme einzelner Lagerbehälter verstanden. Neben dem Ziel einer Effizienzsteigerung bei der Abarbeitung von sog. Pickaufträgen und einer Senkung der Fehlerquote treten heute immer mehr Aspekte der Erhaltung der Gesundheit der Arbeitnehmer bzw. hier der Kommissionierer in den Vordergrund. Daher soll eine tägliche körperliche Belastung durch häufiges Heben und/oder Tragen von Lasten von mehr als ca. 13 kg Gewicht und/oder unterschiedlichen Höhen auf ein Minimum reduziert oder gar ganz vermieden werden. Auch aus diesem Grund werden mobile Kommissionier-Vorrichtungen schon in naher Zukunft fortschreitend an Bedeutung gewinnen.

Als ein Ansatz zur Minderung der Unzulänglichkeiten eines vollständig auf menschlicher Tätigkeit basierenden Kommissionierungssystems ist, allerdings in Bezug auf Hochregallager, z.B. eine Vorrichtung aus der EP 3 192 616 A1 bekannt. Hier ist als mobile Kommissionier-Vorrichtung ein führerloses, vollautomatisch positionierbares Roboterfahrzeug mit einer Grundplatte, einer Antriebseinheit mit Energieversorgung, Steuerung und Sensorik, eine Aufnahmeeinheit mit Handlingsystem als Hubvorrichtung und einer Regaleinheit mit mehreren Ebenen als Mittel zur Auswahl, Zusammenstellung vorbestimmter Waren aus dem Hochregallager und zum Transport zu einer Warenausgabe in einer Art von transportablem Zwischenlager bekannt.

Eine mobile Kommissionier-Vorrichtung, die als nächstliegender Stand der Technik anzusehen ist, wird in dem Dokument DE 10 2014 007 539 A1 offenbart.

Die vorliegende Erfindung hat das Ziel eine Vorrichtung der genannten Art unter Erhöhung ihrer Effizienz und Senkung einer Prozesszeit beim Be- und Entladen weiterzubilden.

Diese Aufgabe wird erfindungsgemäß durch die Merkmale von Anspruch 1 gelöst. Demnach umfasst eine mobile Kommissionier-Vorrichtung ein Zwischenlager mit mehreren Ebenen, wobei die Ebenen des Zwischenlagers einer erfindungsgemäßen mobilen Kommissionier-Vorrichtung zur Aufnahme und Entnahme von Kleinladungsträgern parallel zu einer Richtung einer Aufnahme und Entnahme eines Regals des Regallagers ausgerichtet sind und das Zwischenlager durch einen Rahmen überfahrbar ist, an dem die Hubvorrichtung verschieblich angeordnet ist. Eine erfindungsgemäße mobile Kommissionier-Vorrichtung umfasst damit mindestens eine Hubeinrichtung zur Aufnahme und Übergabe eines Kleinladungsträgers aus einem Stückgutregal des Lagers und Überführung in das fahrbare Zwischenlager oder zur Entnahme aus dem fahrbaren Zwischenlager und Einlagerung in einem bestimmten Regal des Regallagers, durch die das Zwischenlager grundsätzlich von beiden Seiten angefahren werden kann. Erfindungsgemäß ist damit jede Ebene des Zwischenlagers direkt und beidseitig durch die Hubvorrichtung zur Aufnahme und Entnahme von Kleinladungsträgern zugänglich, wobei durch die Ausrichtung des Zwischenlagers parallel zu einer Richtung einer Aufnahme und Entnahme eines Regals des Regallagers kein Drehen des Zwischenlagers und/oder der Hubvorrichtung notwendig ist. Damit verkürzt sich eine Arbeits- bzw. Prozesszeit, die für eine Aufnahme oder Entnahme eines Kleinladungsträger benötigt wird. Ein Kleinladungsträger kann an beiden Endseiten aus jeder der mehreren Ebenen dem Zwischenlager entnommen oder dem Zwischenlager zugeführt werden. Dadurch, dass das Zwischenlager an allen seinen Ebenen von beiden Endseiten her zugänglich und bedienbar ist, ist wiederum kein Drehen des Zwischenlagers und/oder der Hubvorrichtung notwendig. Beide Effekte führen zu einer deutlichen Einsparung an Prozess-Zeit sowohl beim automatischen Be- als auch beim Entladen.

Vorteilhafte Weiterbildungen sind Gegenstand der Unteransprüche. Demnach ist das Zwischenlager in der mobilen Kommissionier-Vorrichtung auswechselbar. Damit kann statt eines Beladens eines vollständig entleerten Zwischenlagers die mobile Kommissionier-Vorrichtung nach dem Entnehmen eines Zwischenlagers in einem Schritt mit einem vollen neuen Zwischenlager versehen werden. Diese komplette Befüllung zeichnet sich ebenfalls durch eine geringe Prozess-Zeit aus. Parallel können leere oder zurücklaufende KTL aus entnommenen Zwischenlagern entfernt und diese dann - getrennt von der mobilen Kommissionier-Vorrichtung - dann wieder befüllt werden. Zudem können in der mobilen Kommissionier-Vorrichtung so in Abstimmung auf die jeweiligen Transportgüter angepasst flexibel verschiedene Bauformen von Zwischenlagern verwendet werden. Für eine Nachlieferung nur von Kleinteilen wird in einer Ausführungsform z.B. ein Zwischenlager mit vielen Etagen bzw. Ebene verwendet, während für große bzw. voluminöse und/oder schwere Lagerteile eine geringe Anzahl von Ebenen in dem Zwischenlager vorgesehen sind.

In einer bevorzugten Ausführungsform der Erfindung sind in dem Rahmen mindestens zwei Hubvorrichtungen getrennt und voneinander unabhängig einsetzbar. Hierdurch wird eine Verladekapazität je Zeiteinheit verdoppelt, da Prozesse zum Laden wie auch zum Entladen parallel und voneinander unabhängig durchgeführt werden können. Der Rahmen ist dabei vorzugsweise geteilt ausgeführt. Dazu ist der Rahmen oder sind die Teilrahmen in Ausführungsformen der Erfindung I-, L- oder C-förmig ausgebildet.

Vorzugsweise ist jeweils ein Rahmen auf mindestens zwei Teleskopschienen verschieblich angeordnet, so dass es einen Spalt zwischen einem betreffenden Regalboden eines Lagerregals sowie einer Ebene des Zwischenlagers der mobilen Kommissionier-Vorrichtung überbrücken kann, und das auf beiden Stirnseiten des Zwischenlagers.

Vorzugsweise umfasst ein Hubsystem einen Greifer. Der Greifer bildet ein Handlingsystem zum Separieren und Schieben oder Ziehen jeweils eines Kleinladungsträgers. Vorzugsweise wird der Greifer zum Entnehmen leerer bzw. rücklaufender Tabletts oder KLT verwendet.

Vorzugsweise sind die Ebenen in dem Zwischenlager gleichsinnig unter einem Winkel schräggestellt. Gemäß einer besonderen Weiterbildung der Erfindung umfasst das Zwischenlager der mobilen Kommissionier-Vorrichtung Rollenebenen, die insbesondere mit ansteuerbaren Stoppern versehen sind. Entsprechende Rollenebenen sind aus dem Bereich stationärer Regallager bekannt, wo sie eine selektive Freigabe von Kleinladungsträgern ermöglichen, um z.B. eine Entnahme eines entleerten Kleinladungsträgers zu erleichtern und ein automatisches Nachrutschen eines vollen Kleinladungsträgers zu ermöglichen. Auf einer schiefen Ebene angeordnet, bewegen sich Kleinladungsträger nach einer Freigabe durch das Lösen eines Stoppers selbsttätig und ohne weiteren Antrieb durch einen Greifer.

In einer besonders bevorzugten Ausführungsform der Erfindung umfasst die Übergabeeinheit der Hubvorrichtung eine Teleskopführung, insbesondere eine Dreifachteleskop-Schiene. Diese Hubvorrichtung mit Teleskopführung ist mit Einstellung eines Kippwinkels in einer Endstellung versehen, vorzugsweise einer tiefsten Endstellung. Durch diese Teleskopführung ist die Übergabeeinheit in einer untersten Endposition soweit nach unten absenkbar, dass unter Beibehaltung eines Anstellwinkels einer Rücklaufschiene Leerbehälter aus einer Rollenbahn eines Regals durch Lösen einer Endanschlagbremse entnommen und auf einer Rollenschiene der Übergabeeinheit nahezu auf Höhe einer Bodenoberfläche aufgenommen werden. Anstelle eines separaten und angetriebenen Greifers wirkt hier zur Bewegung eines Tabletts oder KLT wiederum nur dessen Schwerkraft.

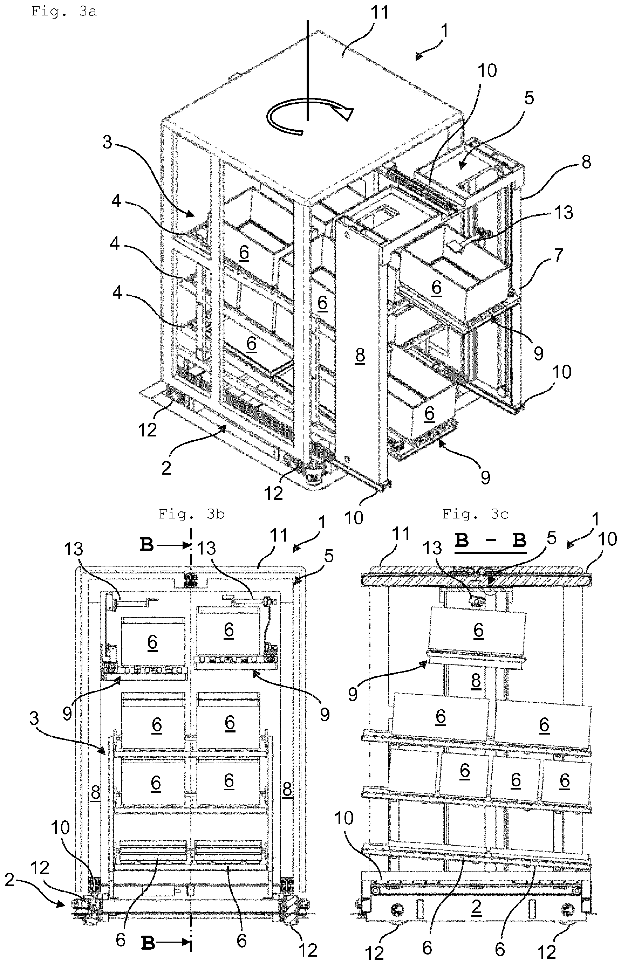

Nachfolgend werden weitere Merkmale und Vorteile erfindungsgemäßer Ausführungsbeispiele unter Bezugnahme auf Ausführungsbeispiele anhand der Zeichnung näher erläutert. Darin zeigen in schematischer Darstellung:

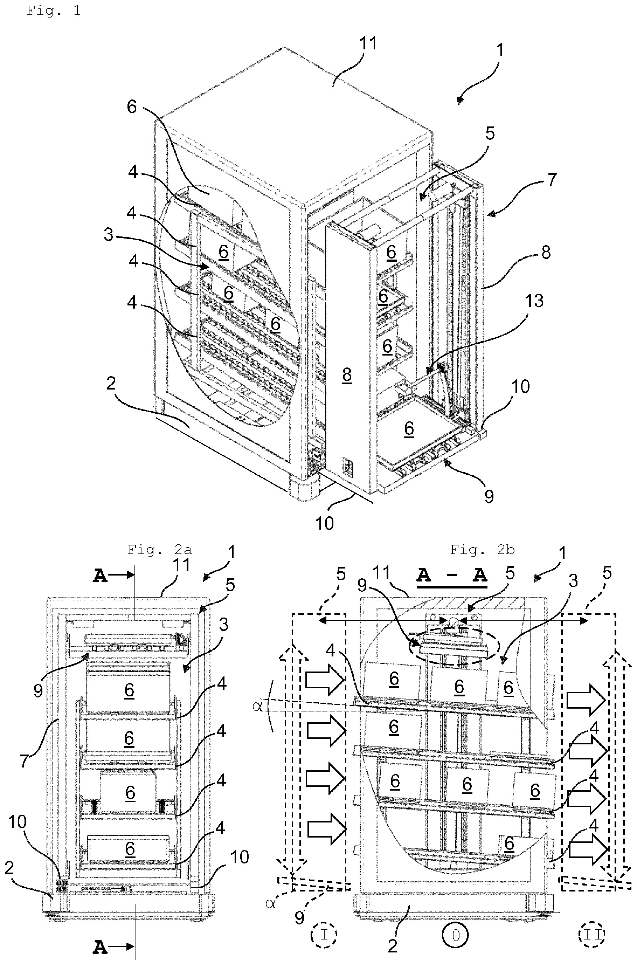

Figur 1: eine perspektivische Ansicht eines ersten Ausführungsbeispiels einer Vorrichtung;
Figuren 2a und 2b:
   eine Draufsicht und eine Seitenansicht der Vorrichtung von Figur 1;
Figuren 3a bis 3c:
   Ansichten eines zweiten Ausführungsbeispiels einer Vorrichtung entsprechend den Ansichten der vorangehenden Figuren;
Figuren 4a und 4b:
   eine perspektivische Ansicht und eine Schnittdarstellung einer Übergabe von Kleinladungsträgern zwischen zwei Vorrichtungen gemäß dem zweiten Ausführungsbeispiel;
Figuren 5a bis 5d:
   Ansichten des Ausführungsbeispiels der Vorrichtung gemäß Figuren 3a bis 3c beim Versorgen eines Regalsystems an einer Fertigungsstraße in Seitenansicht und perspektivischer Darstellung mit Detailvergrößerung;
Figuren 6a und 6b:
   eine perspektivische Ansicht und eine Schnittdarstellung einer Übergabeeinheit zur alternativen Aufnahme von rücklaufenden Tabletts und
Figuren 7a bis 7c:
   Ansichten des Ausführungsbeispiels der Vorrichtung gemäß Figuren 3a bis 3c bei Übergabe eines Kleinladungsträgers aus einem Hochregalsystem in einer Seitenansicht mit Detailvergrößerung sowie einer perspektivischen Darstellung.

Über die verschiedenen Abbildungen und Ausführungsbeispiele hinweg werden für gleiche Elemente stets die gleichen Bezugszeichen verwendet.

Die Abbildung von Figur 1 stellt eine Ansicht eines ersten Ausführungsbeispiels einer Vorrichtung in Form einer mobilen Kommissionier-Vorrichtung 1 dar, die für einen Einsatz in einem Regallager als autonomes, führerloses und vollautomatisch positionierbares Roboterfahrzeug ausgebildet ist. Dazu umfasst die Kommissionier-Vorrichtung 1 einen Antrieb, der zusammen mit einer Energieversorgung über Akku mit Laderegler, Steuerung und Umgebungs-, Sicherheits- und Leit-Sensorik mit Kamerasystemen etc. in nicht weiter dargestellter Weise in einem stabilen Unterbau in Form eines Chassis 2 grundsätzlich bekannter Bauform angeordnet ist. Der Chassis 2 trägt ein Zwischenlager 3 in Form eines Regals mit mehreren Ebenen 4. Eine Hubvorrichtung 5 vervollständigt die mobile Kommissionier-Vorrichtung 1, da die mobile Kommissionier-Vorrichtung 1 damit zur selbstständigen Aufnahme und Übergabe eines Tabletts bzw. Kleinladungsträgers KLT 6 ausgebildet ist. Eine wesentliche Besonderheit der dargestellten mobilen Kommissionier-Vorrichtung 1 besteht darin, dass die Ebenen 4 des Zwischenlagers 3 zur Aufnahme und Entnahme eines KLT 6 parallel zu einer Richtung einer Aufnahme und Entnahme aus einem hier nicht weiter dargestellten Regals eines Regallagers etc. ausgerichtet sind, wie nachfolgend noch detailliert dargestellt und beschrieben wird.

Die Hubvorrichtung 5 umfasst einen Rahmen 7, hier durch zwei als U miteinander gekoppelte Hubsäulen 8 gebildet, und eine Übergabeeinheit 9, siehe Figur 2a. Über zwei 3-fach TeleskopSchienen 10 ist die Hubvorrichtung 5 über einen Bereich soweit verschieblich, dass das Zwischenlager 3 mit seinen vier Ebenen 4 durch den Rahmen 7 mit leerer Übergabeeinheit 9 von einer Position I über eine Neutralposition 0 innerhalb einer das Zwischenlager 3 umgebenden Tragkonstruktion mit einer schützenden äußeren Abdeckung 11 bis in eine Position II überfahrbar ist, wie in Figur 2b angedeutet. In den Positionen I und II außerhalb der Abdeckung 11 ist die Übergabeeinheit 9 an dem Rahmen 7 frei verschieblich, wobei in Position I i.d.R. KLT 6 aufgenommen und in den Zwischenspeicher 3 verbracht und in Position II aus dem Zwischenspeicher 3 entnommen werden, wie jeweils durch die Doppelpfeile angedeutet.

Aus den vorstehend beschriebenen Abbildungen ist auch erkennbar, dass die Ebenen 4 in dem Zwischenlager 3 gleichsinnig unter einem Winkel α gegenüber der Horizontalen schräggestellt sind. Dabei umfasst das Zwischenlager 3 zudem solche Ebenen 4, die mit Rollen bestückt zu sog. Röllchenbahnen ausgebildet sind, so dass ein Lauf von KLT 6 auf den Ebenen 4 nur mittels Schwerkraft ohne weiteren eigenen Antrieb erfolgt. Ferner sind diese Ebenen 4 mit nicht weiter dargestellten ansteuerbaren Stoppern derart versehen, dass jeder KLT 6 an einer bestimmten Position eines vorbestimmten Rasters gestoppt werden kann.

Diese Stopper sind als Anschläge zur Behältervereinzelung einzeln ansteuerbar und sensorüberwacht Damit kann u.a. in jeder der Ebenen 4 ein Abstand zwischen benachbarten KLT 6 so eingehalten werden, dass sich die benachbarten KLT 6 nicht berühren. Weiter sind Sensoren vorgesehen zur Erkennung, ob ein KLT 6 vorhanden ist. Sensoren prüfen zudem, ob eine tatsächliche Behältergröße mit einer erwarteten Behältergröße übereinstimmt.

Volle Tablets oder KLT-Behälter 6 rollen mit dem Lösen eines betreffenden Stoppers allein durch die Wirkung der Schwerkraft aus einer Ebene 4 des Zwischenlagers 3 auf die unter dem gleichen Winkel α schräggestellte Übergabeeinheit 9 der Hubvorrichtung 5, die ebenfalls als Schrägrollenbahneinheit zur Aufnahme von KLT 6 ausgebildet ist und wo wiederum eigene elektrisch ansteuerbare Stopper vorgesehen sind. Durch die Hubvorrichtung 5 wird ein jeweiliger KLT-Behälter 6 dann auf eine beliebige Übergabeposition gefahren. Wenn diese Übergabeposition erreicht ist, wird mindestens der Stopper auf der Übergabeeinheit 9 geöffnet und der Behälter 6 kann z.B. auf eine ebenfalls geneigte Röllchenbahn eines stationären Regals übergeben bzw. gerollt werden.

Das erste Ausführungsbeispiel einer mobilen Kommissionier-Vorrichtung 1 gemäß Figuren 1, 2a und 2b weist u.a. folgende technische Merkmale auf:
- max. 1-2 m/min verfahrbar;
- ein Zwischenlager 3 bietet Raum zur Aufnahme von max. 4 * 3 = 12 KLT als Tabletts der Größe 625 x 425 mm und/oder Behälter der Standardmaße 600 x 400 x 280 mm;
- eine Belastung von max. 50 kg je Ebene 4 bei ca. 25 kg je KLT 6 ist zulässig;
- jeder KLT 6 kann einzeln gestoppt und ausgefahren werden;
- eine Übergabeeinheit 9 der Hubvorrichtung 5 ist als 3-fach Teleskop horizontal und durch zwei Hubsäulen 8 vertikal in die nachfolgend beschriebenen Positionen verfahrbar.

Die Figuren 3a bis 3c zeigen Ansichten eines zweiten Ausführungsbeispiels einer Vorrichtung 1 entsprechend den Ansichten der vorangehenden Figuren. Im Unterschied zu dem ersten Ausführungsbeispiel sind hier nur drei Ebenen 4 in dem Zwischenlager 3 enthalten, das jedoch von der Hubvorrichtung 5 mit beladener Übergabeeinheit 9 in jeder Richtung überfahren werden kann, siehe Schnittdarstellung der Ebene B-B von Figur 3b in Figur 3c.

Figur 3b zeigt die Vorrichtung 1 der perspektivischen Ansicht von Figur 3a in einer Entladeposition II in einer seitlichen Draufsicht entlang einer Achse einer Be- und Entladung. Hier wird deutlich, dass die Ebenen 4 des Zwischenlagers 3 nun so breit ausgeführt sind, dass je Ebene 3 gleich zwei Reihen von KLT 6 der vorstehend genannten Norm-Abmessungen aufgenommen werden können. Zudem sind an den Hubsäulen 8 des Rahmens 7 nun zwei unabhängig voneinander bewegliche Übergabeeinheiten 9 vorgesehen, so dass die Kapazität der Hubvorrichtung 5 verdoppelt wurde. Durch die teilweise entfernte Abdeckung 11 ist in den Figuren 3a und 3b nun auch erkennbar, dass der Antrieb der Vorrichtung 1 Mecanum- bzw. Ilon-Räder 12 umfasst. Diese Rollen-Räder 12 zeichnen sich durch auf dem Umfang bzw. der Felge unter einem Winkel von ca. 45° geneigten, drehbar gelagerte und tonnenförmig ausgebildete Rollen aus. Das Rad stellt den eigentlichen Kontakt zum Boden oder der Fahrbahn nur über diese Rollen her. Jedes dieser Räder 12 wird von einem Antriebsmotor mit veränderlichem Drehsinn und variabler Drehzahl unter Höhenausgleich von Unebenheiten des Untergrundes angetrieben. Vier derartige Räder 12 mit hier sternförmig zur Mitte der Vorrichtung 1 zeigenden Achsen der geneigten Rollen machen omnidirektionale Fahrmanöver möglich, ohne dass die Vorrichtung 1 dazu mit einer mechanischen Lenkung ausgerüstet sein müsste. Die Vorrichtung 1 kann damit unter Verwendung bekannter Sensoren u.a. zur Abstandsmessung z.B. im Bereich des Chassis 2 auf engstem Raum durch Querfahren positioniert und sogar auf der Stelle um beliebige Winkel gedreht werden, wie durch den Pfeil um die Mittelachse in Figur 3a angedeutet. Damit ist die mobile Vorrichtung 1 frei navigierbar. Damit ist eine schnelle und genaue Positionierung der mobilen Vorrichtung 1 möglich und sogar ein Drehen der mobilen Vorrichtung 1 um beliebige Winkel auf der Stelle bei minimiertem Bedarf an innerbetrieblicher Verkehrsfläche.

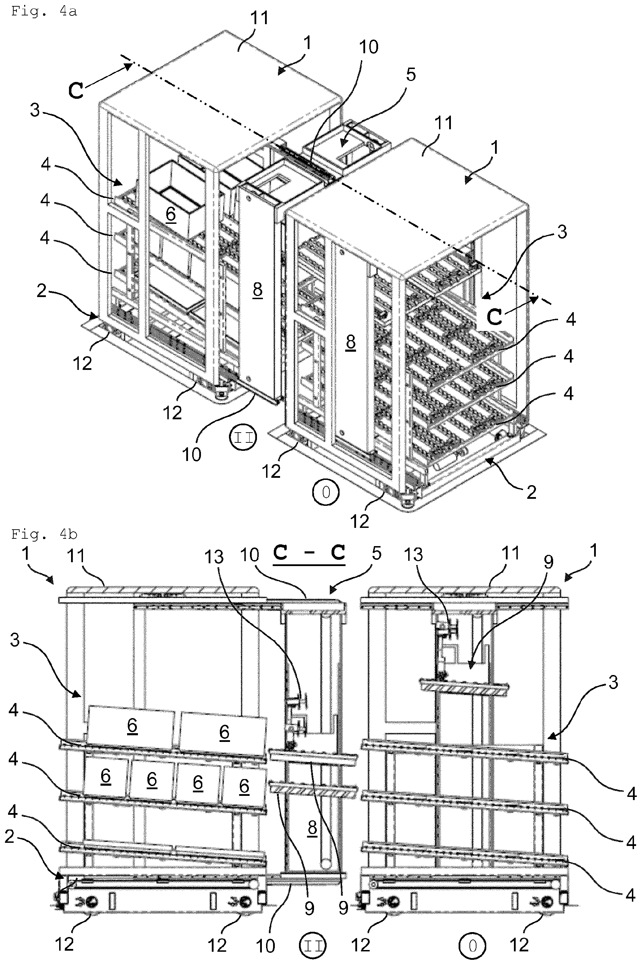

Die Figuren 4a und 4b zeigen eine perspektivische Ansicht und eine Schnittdarstellung einer Übergabe von Kleinladungsträgern 6 zwischen zwei Vorrichtungen 1. Hier entsprechen beide Vorrichtungen dem zweiten Ausführungsbeispiel, was aber zum Austausch oder einer Übergabe mindestens eines KLT 6 nicht erforderlich ist. Wichtig ist in diesem Ausführungsbeispiel für eine derartige Übergabe nur, dass die abgebende Vorrichtung 1 ihre Hubvorrichtung 5 in Position "II" verfährt, während die annehmende Vorrichtung 1 ihre Hubvorrichtung 5 z.B. in der neutralen Position "0" belässt, zumindest aber nicht in Position "I" verfährt. Figur 4a zeigt den Vorgang bei teilweise abgenommener Außenverkleidung 11, während Figur 4b einen Schnitt entlang der Ebene C-C darstellt. Dabei wird anhand der Darstellung von Figur 4b deutlich, dass ein KLT 6 durch die ihre Hubvorrichtung 5 auf eine beliebige Ebene 4 des Zwischenspeichers 3 der in der Abbildung rechts befindlichen annehmende Vorrichtung 1 abgeben kann, wobei beide Hubvorrichtungen 5 der abgebenden Vorrichtung 1 in Betrieb sein können.

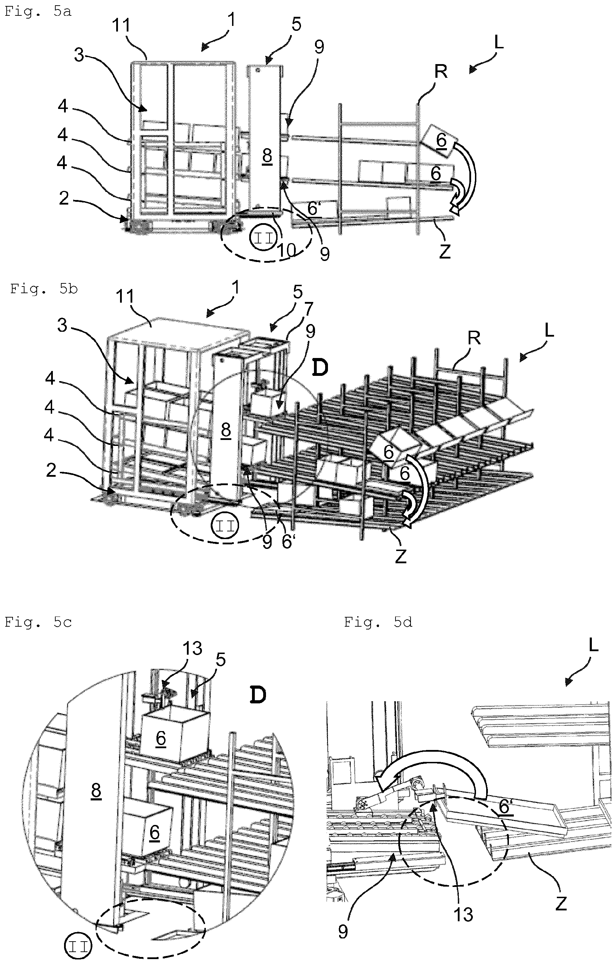

Figuren 5a bis 5d zeigen Ansichten des Ausführungsbeispiels der Vorrichtung 1 gemäß Figuren 3a bis 3c beim Versorgen eines Regalsystems R eines Lagers L in einer Seitenansicht sowie einer perspektivischen Darstellung mit Detailvergrößerung. Ein derartiges Lager L kann z.B. direkt an einer Fertigungsstraße vorgesehen sein und muss dort zuverlässig nachgefüllt werden.

Um einen ausreichenden Vorrat schon im Lager L sicherstellen zu können, weist das Lager L zwei Regale R mit geneigten Röllchenbahnen zur Aufnahme mehrerer KLT 6 auf. Zuunterst ist jeweils eine gegensinnig geneigte Röllchenbahn Z als Mittel zur Zurückführung leerer KLT 6' vorgesehen, die aufgrund ihres geringen Eigengewichts händisch in die jeweilige Röllchenbahn Z eingelegt werden. Figur 5c zeigt als Vergrößerung eines Ausschnitts aus Figur 5b eine Situation bei der Zuführung eines KLT 6 an eine vorbestimmte Stelle in dem Regal R, die der unter Bezugnahme auf die Abbildungen 4a und 4b vergleichbar ist.

Figur 5d zeigt hingegen eine Entnahme eines leeren KLT oder Tabletts 6' aus einem der Röllchenbahn Z, die als Mittel zur Zurückführung leerer KLT 6' vorgesehen sind. Hierzu wird ein Greifsystem 13 im Bereich der Hubvorrichtung 5 verwendet, um einen Leerbehälter 6' an einer Übergabestation am Ende der Röllchenbahn Z auf die Übergabeeinheit 9 der Vorrichtung 1 anzuheben und nachfolgend in jeder freien Ebene 4 des Zwischenlagers 3 der mobilen Vorrichtung 1 einfahren zu können. Dazu wird das Zwischenlager 3 der Vorrichtung 1 i.d.R. durch die Hubvorrichtung 5 überfahren, um den Leerbehälter 6' von Position "I" aus in die unterste Ebene 4 des Zwischenlagers 3 der mobilen Vorrichtung 1 einzulegen.

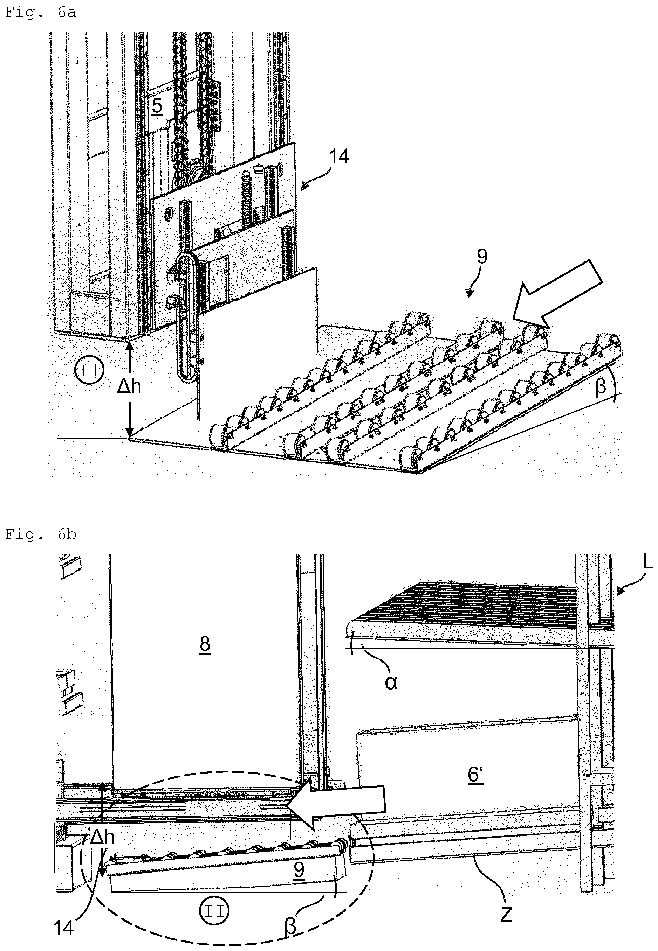

Die Abbildungen der Figuren 6a und 6b zeigen eine perspektivische Ansicht und eine Schnittdarstellung einer Übergabeeinheit 9 zur alternativen Aufnahme von entleerten oder rücklaufenden Tabletts bzw. KLTs 6' aus einer Rückführebene Z in einem Regallager L, beispielsweise gemäß der Figurenfolge 5a bis 5c.

Die Übergabeeinheit 9 ist nun über eine Teleskopführung 14 in der Hubvorrichtung 5 gehalten, so dass die Übergabeeinheit 9 um einen Betrag Δh unter ein in vorangehenden Ausführungsbeispielen u.a. durch den Chassis 2 als Basisrahmen mit Antrieb und Energieversorgung etc. vorgegebenes Minimalniveau nahezu auf eine Fahrbahn bzw. Bodenoberfläche hinab abgesenkt werden kann. Dazu ist die Teleskopführung 14 hier als Dreifachteleskop-Schiene ausgebildet. Damit ist es nun möglich, unter zusätzlicher Angleichung eines Neigungswinkels der Übergabeeinheit 9 von α der Regalböden und der Ebenen 4 des Zwischenlagers 3 auf einen entgegengesetzten Winkel β als Neigungswinkel der Rückführebene Z für leere oder rücklaufende KLT 6' in dem Regallager L durch Lösen einer Sperre die leere oder rücklaufende KLT 6' allein unter Wirkung der Schwerkraft über die Neigung der Ebene auf die Übergabeeinheit 9 der Hubvorrichtung 5 zu überführen.

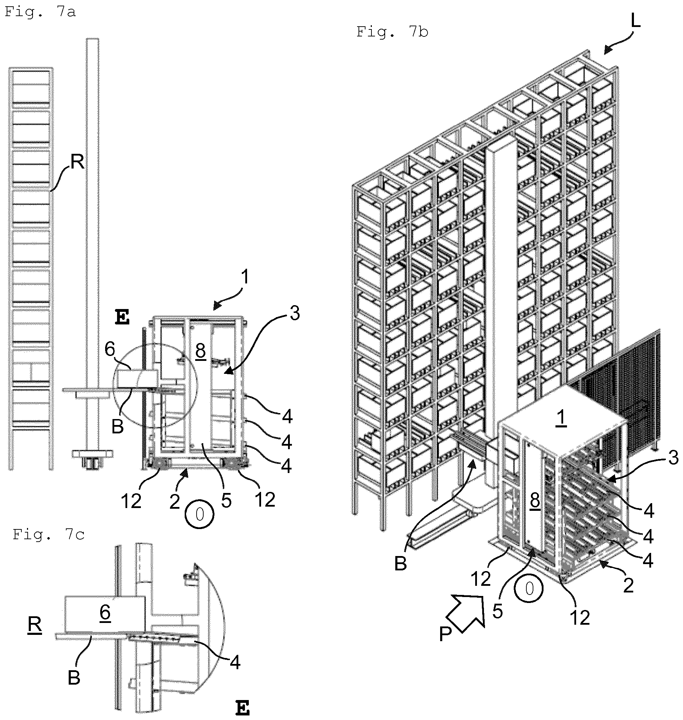

Die Folge der Figuren 7a bis 7c zeigt schließlich Ansichten des Ausführungsbeispiels der Vorrichtung 1 gemäß Figuren 3a bis 3c bei Übergabe eines Kleinladungsträgers 6 aus einem nun als Hochregalsystem ausgebildeten Lager L in einer Seitenansicht mit Detailvergrößerung E sowie einer perspektivischen Darstellung. Die Einführung einzelner oder gleich mehrerer Kleinladungsträger 6 in eine Ebene 4 des Zwischenlagers 3 in die mobile Vorrichtung 1 hinein wird hier durch einen in einer Lagerebene des Hochregalsystems verfahrbaren Roboterarm mit einer entsprechend ausgebildeten Ladebrücke B vorgenommen. Die Hubvorrichtung 5 der mobilen Vorrichtung 1 befindet sind in der neutralen Position "0", so dass grundsätzlich auch eine gleichzeitige Beschickung mehrerer Ebenen 4 des Zwischenlagers 3 der mobilen Vorrichtung 1 im Zuge einer automatischen Beladung einer entsprechend ausgebildeten Beladestelle des Lagers L z.B. durch Schieber möglich ist. Diese Möglichkeit und Flexibilität bei der Beladung aller vorstehend vorgestellter Varianten der mobilen Vorrichtung 1 stellt einen weiteren Geschwindigkeitsvorteil gegenüber bekannten Systemen dar.

Die Position P bezeichnet in der Darstellung von Figur 7b den Ort eines oder mehrerer Zwischenlager 3, die aus dem Lager L heraus bestückt werden. Ein gefülltes Zwischenlager 3 kann nachfolgend in eine mobile Kommissionier-Vorrichtung 1 eingesetzt werden, oder das Zwischenlager 3 der mobilen Vorrichtung 1 wird aus einem an der Position P stationär angeordneten Zwischenlager 3 heraus in einem Arbeitsschritt komplett bestückt.

Durch eine mobile Kommissionier-Vorrichtung 1 der vorstehend beispielhaft beschriebenen Art wird eine Aufnahme aus einer automatischen Befüllung, eine führerlose Entnahme gefüllter KLT Behälter 6 und eine Aufnahme von Rückläufern oder Leerbehältern 6' zur Rückführung geleistet. Damit ist ein geschlossener Behälterkreislauf innerhalb eines Lagers L realisiert. Zudem ist eine Anzahl der durch eine einzige mobile Kommissionier-Vorrichtung 1 transportierbaren KLT Behälter 6 ausreichend hoch, um zukünftigen Anforderungen gerecht werden zu können. Ein Gesamtgewicht einer voll beladenen mobilen Kommissionier-Vorrichtung 1 kann dabei in einem Bereich von unter ca. 1.000 kg gehalten werden. Eine automatische Übergabe zum Nachführen gefüllter KLT Behälter 6 z.B. an einem direkt an einer Fertigungsstraße vorgesehen Lager L ist ganz ohne menschliches Zutun realisiert, wobei auch eine Entnahme entleerter KLT 6' in Abweichung und Weiterentwicklung von der in Figur 5d dargestellten Situation realisierbar ist. Infolgedessen kann jeder menschliche Eingriff auf KLT 6, 6' innerhalb eines geschlossenen Kreislaufes unterbleiben, um diesbezüglich auch schärfsten Anforderungen der Arbeitsgesundheit zu genügen.

In nicht weiter zeichnerisch dargestellten Ausführungsbeispielen der Erfindung sind zudem folgende technische Merkmale realisiert: Das Zwischenlager 3 wird als Innenrahmen mit Röllchenbahnen an drei bis vier Ecken hydraulisch gelagert. Durch diese Lagerung ist es möglich, durch das Rollen der Mecanumräder und/oder Bodenunebenheiten hervorgerufene mechanische Schwingungen der mobilen Kommissionier-Vorrichtung auszugleichen bzw. zu bedämpfen. Zudem wird das Zwischenlager 3 in jeder Fahrtphase waagerecht und stabil gehalten, und das insbesondere nahezu in Echtzeit.

Damit werden erfindungsgemäß folgende vorteilhafte Anforderungen durch eine vorstehend mit Ausführungsbeispielen beschriebene mobile Kommissionier-Vorrichtung 1 erfüllt:
- Automatische Befüllung mit KLTs aus einem Hochregallager, wobei auch ein manuelles Entnehmen und Befüllen weiterhin möglich ist.
- Selbstständiges Abholen von KLTs aus Bereitstellungsplätzen, wie Regalen oder ähnliches.
- Automatische Abgabe der KLTs an Montagearbeitsplätze bzw. dort positionierte kleinere Regallager.
- Geregelte, überwachte und protokollierte Auf- und Abgabe einzelner KLTs bei selbstständigem Erkennen einer Aus- und Abgabeposition.
- KLT-Managementsystem in einer jeden mobilen Kommissionier-Vorrichtung 1, durch die eine jede Aufnahme und Abgabe von KLTs überwacht, falsche KLTs rückstellt, KLTs bei Dispositionsänderungen in einem aktuellen Zustellprozess umsortiert und zur Wegeoptimierung KLTs auch an andere mobile Kommissionier-Vorrichtungen 1 oder stationäre Zwischenlager 3 übergeben kann.
- Aufnahme leerer KLTs und Zwischenlagerung in einen mitfahrenden Zwischenspeicher.
- Geregelte Abgabe leerer KLTS an definierte Übergabestationen und die Abholung der gefüllter KLTs aus den Übergabestationen zum Weitertransport.
- Direkt Übergabe von KLTs von einer mobilen Vorrichtung in eine andere mobile Vorrichtung auch ohne Zwischenpufferung.

Durch eine vorstehend exemplarisch beschriebene mobile Kommissionier-Vorrichtung 1 wird eine bisher vorhandene Lücke in der automatisierten innerbetrieblichen Logistik von KLTs in Lagern sowie für nachgelagerte Logistik und Kommissionierung geschlossen. Durch eine mobile Kommissionier-Vorrichtung 1 wird ganz ohne menschliches Zutun eine automatisierte und bedarfsgerechte Zubringung und Abholung von KLTs bei hoher Transportkapazität realisiert. Im Vergleich zu heutigen Gegebenheiten wird dabei zudem eine Reduktion von innerbetrieblichen Verkehrsflächen und mithin eine verbesserte Nutzung von Lagerräumen erzielt.

### Bezugszeichenliste

- 1: mobile Kommissionier-Vorrichtung
- 2: Chassis
- 3: Zwischenlager als Teil von 1
- 4: Ebene des Zwischenlagers 3 auf dem Chassis 2
- 5: Hubvorrichtung
- 6: Kleinladungsträger / KLT oder Tablett 6' leere oder rücklaufende KLT
- 7: Rahmen / Innenrahmen
- 8: Hubsäule
- 9: Übergabeeinheit
- 10: Teleskop-Schiene zum Verfahren des Rahmens 7
- 11: Abdeckung mit Stützen, die das Zwischenlager 3 umgibt
- 12: Mecanum- bzw. Ilon-Rad
- 13: Greifsystem
- 14: Teleskopführung

- I: Ladeposition Neutralposition der Hubvorrichtung 5
- II: Entladeposition

- A: Arm
- B: Brücke eines Lager-Roboterarms
- L: Regallager
- P: Position eines Zwischenlagers
- R: einzelnes Regal des Regallagers L
- Z: Rückführebene für leere oder rücklaufende KLT 6' im Regallager L
- α: Winkel der Neigung der Ebenen 4 in dem Zwischenlager 3
- β: Neigungswinkel der Rückführebene Z für zurücklaufende oder leere KTLs in einem Reallager L
- Δh: Höhenversatz durch Teleskopführung 14

## Patentansprüche

1. Mobile Kommissionier-Vorrichtung (1) für ein Regallager (L) umfassend
ein führerloses, vollautomatisch positionierbares Roboterfahrzeug mit Antrieb, Energieversorgung, Steuerung und Sensorik,
ein Zwischenlager (3) mit mehreren Ebenen (4) und
eine Hubvorrichtung (5) zur Aufnahme und Übergabe eines Kleinladungsträgers (6),
**dadurch gekennzeichnet, dass**
die Ebenen (4) des Zwischenlagers (3) zur Aufnahme und Entnahme eines Kleinladungsträgers (6) parallel zu einer Richtung einer Aufnahme und Entnahme eines Regals (R) des Regallagers (L) ausgerichtet sind und die Ebenen (4) in dem Zwischenlager (3) gleichsinnig unter einem Winkel (α) schräggestellt sind, wobei
das Zwischenlager (3) durch einen Rahmen (7) überfahrbar ist, an dem die Hubvorrichtung (5) verschieblich angeordnet ist.

2. Vorrichtung (1) nach dem vorhergehenden Anspruch, **dadurch gekennzeichnet, dass** das Zwischenlager (3) in der mobilen Kommissionier-Vorrichtung (1) auswechselbar ist.

3. Vorrichtung (1) nach einem der vorhergehenden Ansprüche, **dadurch gekennzeichnet, dass** in dem Rahmen (7) mindestens zwei getrennt und voneinander unabhängig einsetzbare Hubvorrichtungen (5) vorgesehen sind.

4. Vorrichtung (1) nach dem vorhergehenden Anspruch, **dadurch gekennzeichnet, dass** der Rahmen (7) geteilt ausgeführt ist, wobei der Rahmen (7) oder die Teilrahmen mit einer Hubsäule (8) L-, I- oder C-förmig ausgebildet sind.

5. Vorrichtung (1) nach einem der vorhergehenden Ansprüche, **dadurch gekennzeichnet, dass** ein Rahmen (7) auf mindestens zwei Teleskopschienen (10) verschieblich angeordnet ist.

6. Vorrichtung (1) nach einem der vorhergehenden Ansprüche, **dadurch gekennzeichnet, dass** eine Hubvorrichtung (5) eine Übergabeeinheit (9) und/oder einen Greifer (12) umfasst.

7. Vorrichtung (1) nach einem der vorhergehenden Ansprüche, **dadurch gekennzeichnet, dass** das Zwischenlager (3) gefüllt in die mobile Kommissionier-Vorrichtung (1) einsetzbar ist.

8. Vorrichtung (1) nach einem der vorhergehenden Ansprüche, **dadurch gekennzeichnet, dass** das Zwischenlager (3) Ebenen (4) umfasst, die mit Rollen bestückt zu Röllchenbahnen ausgebildet sind.

9. Vorrichtung (1) nach dem vorhergehenden Anspruch, **dadurch gekennzeichnet, dass** die Ebenen (4) mit mindestens je einem ansteuerbaren Stopper versehen sind.

10. Vorrichtung (1) nach einem der vorhergehenden Ansprüche, **dadurch gekennzeichnet, dass** die Übergabeeinheit (9) eine Teleskopführung (14) umfasst, insbesondere eine Dreifachteleskop-Schiene.

11. Vorrichtung (1) nach dem vorhergehenden Anspruch, **dadurch gekennzeichnet, dass** die Übergabeeinheit (9)zur Einstellung eines Neigungswinkels (β) ausgebildet ist, insbesondere in einer tiefsten Endstellung.

12. Vorrichtung (1) nach einem der vorhergehenden Ansprüche, **dadurch gekennzeichnet, dass** das Zwischenlager (3) als Innenrahmen mit Röllchenbahnen an drei bis vier Ecken in der mobilen Kommissionier-Vorrichtung (1) hydraulisch gelagert ist.

## Claims

1. Mobile picking device (1) for a rack store (L) comprising a driverless, fully automatically positionable roboter vehicle with drive, power supply, control and sensor system,
an intermediate store (3) with several levels (4) and
a lifting device (5) for receiving and transferring a small load carrier (6),
**characterised in that**
the levels (4) of the intermediate store (3) for receiving and removing a small load carrier (6) are aligned parallel to a direction of receiving and removing a shelf (R) of the shelf store (L) and the levels (4) in the intermediate store (3) are inclined in the same direction at an angle (α), wherein
the intermediate store (3) can be traversed by a frame (7) on which the lifting device (5) is displaceably arranged.

2. Device (1) according to the preceding claim, **characterised in that** the intermediate store (3) in the mobile order-picking device (1) is exchangeable.

3. Device (1) according to one of the preceding claims, **characterised in that** at least two lifting devices (5), which can be used separately and independently of one another, are provided in the frame (7).

4. Device (1) according to the preceding claim, **characterised in that** the frame (7) is divided, wherein the frame (7) or the partial frames with a lifting column (8) are L-, I- or C-shaped.

5. Device (1) according to one of the preceding claims, **characterised in that** a frame (7) is slidably arranged on at least two telescopic rails (10).

6. Device (1) according to one of the preceding claims, **characterised in that** a lifting device (5) comprises a transfer unit (9) and/or a gripper (12).

7. Device (1) according to one of the preceding claims, **characterised in that** the intermediate storage (3) can be inserted filled into the mobile picking device (1).

8. Device (1) according to one of the preceding claims, **characterised in that** the intermediate storage (3) comprises levels (4) which, equipped with rollers, are formed into roller tracks.

9. Device (1) according to the preceding claim, **characterised in that** the levels (4) are each provided with at least one controllable stopper.

10. Device (1) according to one of the preceding claims, **characterized in that** the transfer unit (9) comprises a telescopic guide (14), in particular a triple telescopic rail.

11. Device (1) according to the preceding claim, **characterised in that** the transfer unit (9) is designed to adjust an angle of inclination (β), in particular in a lowest end position.

12. Device (1) according to one of the preceding claims, **characterised in that** the intermediate storage (3) is hydraulically mounted as an inner frame with roller tracks at three to four corners in the mobile picking device (1).

## Revendications

1. Dispositif de prélèvement mobile pour un magasin à rayonnages (L) comprenant
un véhicule robot sans conducteur, à positionnement entièrement automatique, doté d'un système d'entraînement, d'alimentation électrique, de commande et de capteurs, une stockage intermédiaire (3) à plusieurs niveaux (4) et un dispositif de levage (5) pour recevoir et transférer un bac pour petit matériel (6),
**caractérisé en ce que**
les niveaux (4) du stockage intermédiaire (3) pour recevoir et retirer un bac pour petit matériel (6) sont alignés parallèlement à une direction de réception et de retrait d'une étagère (R) du magasin à étagères (L) et les niveaux (4) dans le magasin intermédiaire (3) sont inclinés dans la même direction selon un angle (α), dans lequel
le stockage intermédiaire (3) peut être traversé par un cadre (7) sur lequel le dispositif de levage (5) est disposé de façon déplaçable.

2. Dispositif (1) selon la revendication précédente, **caractérisé en ce que** le stockage intermédiaire (3) est interchangeable dans le dispositif de prélèvement mobile (1).

3. Dispositif (1) selon l'une des revendications précédentes, **caractérisé en ce qu'**au moins deux dispositifs de levage (5), pouvant être utilisés séparément et indépendamment l'un de l'autre, sont prévus dans le cadre (7).

4. Dispositif (1) selon la revendication précédente, **caractérisé en ce que** le cadre (7) est divisé, le cadre (7) ou les cadres partiels avec une colonne de levage (8) étant en forme de L, I ou C.

5. Dispositif (1) selon l'une des revendications précédentes, **caractérisé en ce qu'**un cadre (7) est disposé de manière coulissante sur au moins deux rails télescopiques (10).

6. Dispositif (1) selon l'une des revendications précédentes, **caractérisé en ce qu'**un dispositif de levage (5) comprend une unité de transfert (9) et/ou une pince (12).

7. Dispositif (1) selon l'une des revendications précédentes, **caractérisé en ce que** le stockage intermédiaire (3) peut être inséré rempli dans le dispositif de prélèvement mobile (1) .

8. Dispositif (1) selon l'une des revendications précédentes, **caractérisé en ce que** le stockage intermédiaire (3) comprend des niveaux (4) qui, équipés de rouleaux, sont formés en convoyeurs à rouleaux.

9. Dispositif (1) selon la revendication précédente, **caractérisé en ce que** les niveaux (4) sont munis chacun d'au moins un bouchon contrôlable.

10. Dispositif (1) selon l'une des revendications précédentes, **caractérisé en ce que** l'unité de transfert (9) comprend un guide télescopique (14), notamment un triple rail télescopique.

11. Dispositif (1) selon la revendication précédente, **caractérisé en ce que** l'unité de transfert (9) est conçue pour régler un angle d'inclinaison (β), notamment dans une position finale basse.

12. Dispositif (1) selon l'une des revendications précédentes, **caractérisé en ce que** le stockage intermédiaire (3) est monté hydrauliquement sous forme de cadre intérieur avec des chemins de roulement à trois ou quatre coins dans le dispositif de prélèvement mobile (1).
